# EUROPÄISCHE PATENTSCHRIFT

(11) **EP 1 024 302 B1**
(45) Veröffentlichungstag und Bekanntmachung des Hinweises auf die Patenterteilung: **26.10.2005**
(21) Anmeldenummer: 00101196.4
(22) Anmeldetag: 22.01.2000
(51) Int. Cl.: F16B 37/04

(54) **Befestigungselement zur Verankerung in einer Montageschiene**
Fastening element for profiles
Elément de fixation pour profilés

(30) Priorität: 26.01.1999 DE 19903036
(43) Veröffentlichungstag der Anmeldung: 02.08.2000
(73) Patentinhaber: SW Stanzwerk Glarus AG, 8750 Glarus (CH)
(72) Erfinder: Hagemann, Ludbert, 91608 Geslau (DE)
(74) Vertreter: Jochem, Bernd

(56) Entgegenhaltungen:
- EP-A- 0 787 909
- EP-A- 0 837 256
- DE-A- 19 652 027
- DE-A- 19 705 709

## Beschreibung

Die Erfindung befaßt sich mit einem Befestigungselement zur Verankerung in einer Montageschiene mit im wesentlichen C-förmigem Querschnitt und zwei zueinander abgewickelten Schenkelenden , zwischen denen eine Montageschlitz verbleibt, das ein Klemmelement mit einer Durchgangsbohrung, das auf die Schenkelenden der Montageschiene auflegbar ist, ein Spannelement mit einer Bohrung, das in den Hohlraum der Schiene einführbar und hinter die Schenkelenden der Montageschiene eindrehbar ist, und eine sich durch die Bohrungen erstreckende Gewindestange mit einer Kontermutter aufweist, mit deren Hilfe die Schenkelenden zwischen dem Klemmelement und dem Spannelement einspannbar sind, wobei das Befestigungselement mit wenigstens einer Federlasche durch Verdrehen des Klemmelements vorfixierbar ist.

Derartige Befestigungselemente dienen in der Haus- und Gebäudetechnik dazu, an wand- oder deckenseitig befestigten Schienensystemen Heizungs-, Lüftungs-, Sanitäranlagen o. dgl. zu befestigen. Die üblicherweise verwendeten Montageschienen besitzen einen C-förmigen Querschnitt, in welchen die Befestigungselemente verankert werden, wobei sie insbesondere mit den freien Schenkelenden des C-Profils verklemmt werden. An den Befestigungselementen können weitere Befestigungseinrichtungen, wie z. B. Rohrschellen, angebracht werden.

Aus der DE-C-197 22 778 ist bereits eine Verankerungseinheit bekannt, bei welcher mit Hilfe eines Gewindestiftes und einer Kontermutter die Schenkelenden zwischen einer Klemmplatte und einer Gewindeplatte eingespannt werden. Eine Vorfixierung des Befestigungselements vor dem Anziehen der Kontermutter ist durch starre Spreizschenkel an der Klemmplatte möglich, welche die Montageschienen beim Verdrehen aufspreizen und dadurch die Klemmplatte halten. Die Spreizschenkel greifen in Ausnehmungen in der Gewindeplatte ein und nehmen diese so beim Verdrehen des Klemmelements hinter die Schenkelenden mit.

Nachteilig bei diesem vorbekannten Befestigungselement ist, daß die Vorfixierung durch ein Aufweiten der recht massiv ausgeführten Montageschienen erfolgt. Die hohen Andruckkräfte führen bereits in der vorfixierten Stellung zu Klemmkräften, die nachträgliche Korrekturen erschweren. Hinzu kommt, daß die Montageschiene zwangsläufig elastisch deformiert wird, was bei extremer Belastung, beispielsweise im Falle von Schubbewegungen durch Wärmeausdehnung von Rohrelementen, die Sicherheitsreserven reduziert.

Ein weiteres Befestigungselement ist aus der EP 0 826 889 A1 bekannt, bei welchem die Gewindeplatte einstückig mit der Klemmplatte ausgebildet ist und die Klemmplatte die Schienenmutter wenigstens teilweise überragen muß, wobei die Verbindung über eine Lasche hergestellt wird. Hierdurch ergibt sich eine ungünstige Krafteinleitung im Bereich des Gewindes, zumal aufgrund der herstellungstechnisch begrenzten Stärke der Gewindeplatten nur geringe Gewindehöhen mit wenigen Gängen möglich sind.

Die DE 197 05 709 A1 zeigt ein Befestigungselement, bei welchem Federelemente zwischen dem Spannelement und einem Blechelement ein Verklemmen in einer Vormontagestellung ermöglichen.

Schließlich ist auch aus der EP 0 837 256 A1 ein Befestigungselement der eingangs beschriebenen Art bekannt. Dort sind Federlaschen an einem dem Spannelement zugeordneten Blech vorgesehen, die in der Vormontagestellung von innen durch den Schlitz greifen und zum Verklemmen auf den Schenkelenden aufliegen.

Die Aufgabe der Erfindung besteht darin, ein Befestigungselement zu schaffen, das ohne Formänderung der Montageschiene eine sichere Vorfixierung des Befestigungselements erlaubt.

Erfindungsgemäß wird die Aufgabe dadurch gelöst, daß die wenigstens eine Federlasche an dem Klemmelement vorgesehen ist und durch Verdrehen des Klemmelements unter ein Schenkelende in federnder Anlage einschiebbar ist.

Der Vorteil des erfindungsgemäßen Befestigungselements besteht darin, daß die in der vorfixierten Stellung des Befestigungselements wirkenden Haltekräfte nicht durch Elastizitäten der Montageschiene, sondern durch die elastischen Federlaschen an der Klemmplatte aufgebracht werden. Diese lassen sich gezielt dimensionieren, so daß beispielsweise die Haltekräfte so bemessen werden können, daß zwar ein sicherer Halt gegeben, gleichzeitig jedoch noch Anpassungsmöglichkeiten durch axiales Verschieben des vorfixierten Befestigungselements in der Montageschiene möglich sind.

Ein weiterer Vorteil einer Vorfixierung über Federlaschen besteht darin, daß sich ein sehr kleiner Eindrehwinkel von beispielsweise ungefähr 20° realisieren läßt, der lediglich eine kurze Handdrehung erfordert. Bei den bisher üblichen Befestigungselementen mußte das Klemmelement um wenigstens 45° oder sogar 90° gedreht werden, um in die vorfixierte Stellung zu gelangen.

Vorzugsweise liegt die Federlasche beim Spannen des Spannelements zwischen diesem und dem Schenkelende. Auf diese Weise wird die definierte Anlagefläche der Federlasche an der Unterseite des Schenkelendes auch zur Einleitung der Spannkraft durch das Spannelement genutzt. Die Anlagekraft der Federlasche läßt sich durch Anziehen des Spannelements kontinuierlich von der federnden Anlagekraft aus der vorfixierten Stellung bis zur abschließenden Spannkraft in der fertig montierten Stellung steigern. Eine genau definierte Anlagefläche einer Federlasche kann beispielsweise dadurch erreicht werden, daß eine Federlasche auf ihrer Anlageseite an dem Schenkelende mit einer Nase versehen ist, die an ihrer Stirnseite abgerundet oder abgeschrägt ist. Die Rundung bzw. Schräge erleichtert es, die Federlasche unter der Wirkung der Anlagekraft unter ein Schenkelende zu schieben.

In bevorzugter Ausführungsform der Erfindung sind zwei Federlaschen vorgesehen, die in axialem Abstand unter jeweils ein Schenkelende eindrehbar und beide durch das Spannelement gegen die Schenkelenden anpreßbar sind.

Durch die beiden in verschiedenen axialen Bereichen der Montageschiene angreifenden Federlaschen, die gleichzeitig, wie bereits zuvor erwähnt, als Druckelement für das angezogene Spannelement dienen, erfolgt eine insgesamt günstigere Krafteinleitung in die Montageschiene, die insbesondere bei kurzen Laststößen einem Aufweiten der beiden Schenkel der Montageschiene entgegenwirkt. Die beiden Federlaschen sind vorzugsweise in ungefähr rotationssymmetrischer Lage um die Durchgangsbohrung angeordnet, um bei der Einleitung von Zugkräften über die Gewindestange das Entstehen von auf die Schenkel der Montageschiene wirkenden Biegemomenten zu vermeiden.

In weiterer bevorzugter Ausbildung der Erfindung ist vorgesehen, daß wenigstens eine Federlasche das Spannelement beim Verdrehen des Klemmelements mitnimmt, beispielsweise in der Weise, daß wenigstens eine Federlasche lose geführt in einer Nut in dem Spannelement liegt oder fest oder lösbar mit diesem verbunden ist.

Eine solche Ausführungsform bietet den Vorteil, daß die Federlaschen und das Spannelement in einem einzigen Eindrehvorgang über einen relativ kleinen Winkelbereich in ihre Endstellung gelangen und abschließend lediglich noch die Kontermutter zum Spannen des Spannelements angezogen werden muß. Die Nuten in dem Spannelement sollten im Mitnahmebereich vorzugsweise nicht tangential ausgerichtet sein, um ein Herausrutschen der Federlaschen aus ihrer Nut beim Eindrehen zu verhindern. Zweckmäßigerweise liegt eine Federlasche, vorzugsweise beide Federlaschen, im eingesteckten Zustand quer zur Ausrichtung der Montageschiene.

Vorzugsweise ist das Spannelement mit einem Durchgangsgewinde für den Gewindestift versehen. Auf diese Weise ist es vor dem endgültigen Anziehen der Kontermutter möglich, durch Drehen des Gewindestiftes von außen dessen Lage bezüglich des Spannelements zu verändern. Beispielsweise ist es denkbar, das an dem Gewindestift befestigte Bauteil, z. B. eine Rohrbefestigung, in seiner senkrechten Lage zur Schiene zu justieren.

Bei einer weiteren bevorzugten Ausführungsform der Erfindung ist vorgesehen, daß an dem Klemmelement wenigstens eine im wesentlichen senkrecht abgewinkelte Drucklasche vorgesehen ist. Zweckmäßig ist das Vorsehen von zwei Drucklaschen im Bereich der Ansatzstellen der Federlaschen. Die Drucklaschen dienen als Angriffsflächen für die Finger und erleichtern so das Eindrehen des Klemmelements auch bei höheren Klemmkräften. Vorzugsweise legt sich wenigstens eine Drucklasche in der vorfixierten Stellung an eine Flanke der Montageschiene an. Damit dient die Drucklasche als Anschlag, die dem Monteur das Erreichen der vorfixierten Stellung anzeigt und sicherstellt, daß das Klemmelement auch in ausreichender Weise gedreht wird. Dadurch werden Fehlmontagen verhindert.

Es kann zweckmäßig sein, wenigstens eine Drucklasche an einer Stelle aufzubiegen, um im Fall einer Demontage des Befestigungselements das Klemmelement nach dem Lösen der Kontermutter durch Ansetzen eines Schraubendrehers o. dgl. aus der vorfixierten Stellung zu lösen. Bei beidseitiger Anbringung der Aufbiegung, ähnlich einer Flügelmutter, wird die manuelle Montage und Demontage wesentlich erleichtert.

In noch weiterer Ausbildung der Erfindung ist vorgesehen, daß der Gewindestift mit Mitteln versehen ist, die ihn am Herausbewegen aus der Bohrung in dem Spannelement hindern. Derartige Mittel, wie z. B. ein Kopf, ein gestauchtes Stiftende, Gewindesperren o. dgl., verhindern ein unbeabsichtigtes Lösen des Gewindestiftes. Es verhindert ferner, daß die Kontermutter in einem Zustand angezogen wird, in welchem der Gewindestift lediglich in einer unzureichend kleinen Zahl von Gewindegängen in der Gewindebohrung in dem Spannelement sitzt. Ein derartiger Montagefehler ist optisch nicht zu erkennen und kann bei einer Belastung des Befestigungselements zu einem Ausreißen des Gewindestifts aus der Gewindebohrung des Spannelements führen.

Nachfolgend wird anhand der beigefügten Zeichnungen näher auf ein Ausführungsbeispiel der Erfindung eingegangen. Es zeigen:
- Fig. 1: eine Ansicht der Einzelteile eines Befestigungselements zur Verankerung in einer Montageschiene;
- Fig. 2: das Befestigungselement nach Fig. 1 in vormontiertem Zustand;
- Fig. 3: eine aufgebrochene Ansicht einer Montageschiene mit Befestigungselementen in verschiedenen Montagestellungen;

- Fig. 4: eine durchbrochene Schrägansicht eines abschließend in der Montageschiene verankerten Befestigungselements;
- Fig. 5: eine weitere durchbrochene Schrägansicht aus anderer Perspektive.

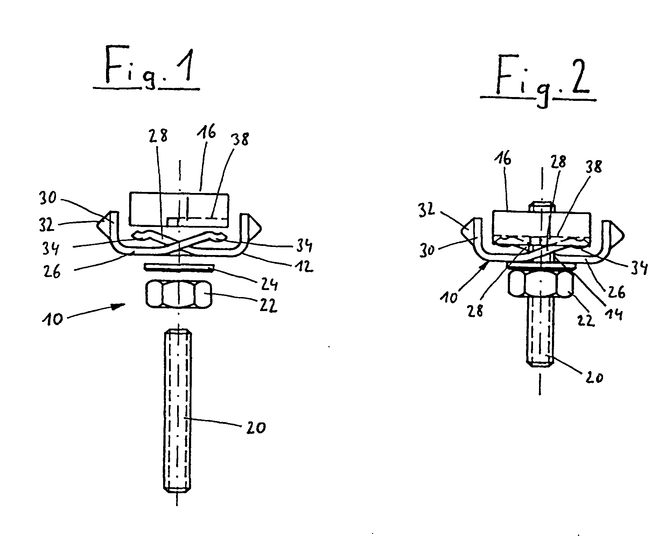

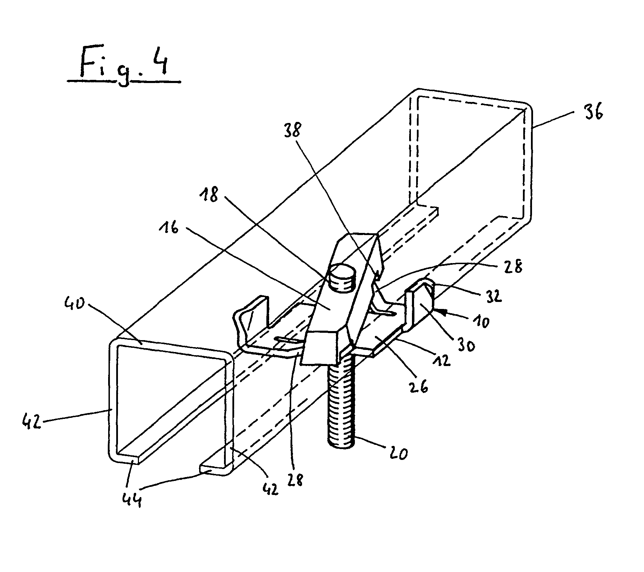

In Fig. 1 ist ein in seine Einzelteile zerlegtes Befestigungselement 10 dargestellt. Das Befestigungselement 10 besteht aus einem Klemmelement 12 mit einer Durchgangsbohrung 14 (siehe Fig. 2), einem quaderförmigen Spannelement 16 mit einer Durchgangsgewindebohrung 18 (siehe auch Fig. 4), einem Gewindestift 20, der durch die Durchgangsbohrung 14 durchsteckbar und in die Gewindedurchgangsbohrung 18 in dem Spannelement 16 einschraubbar ist, sowie einer Kontermutter 22, die über eine Ringscheibe 24 an dem Klemmelement 12 anliegt.

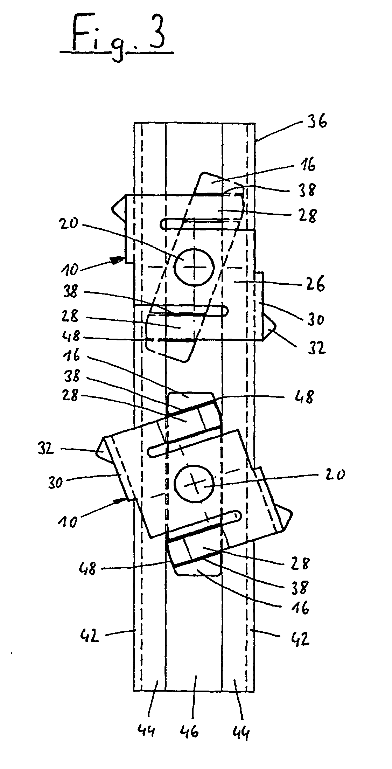

Das Klemmelement 12 untergliedert sich in einer Klemmplatte 26, in welcher die Durchgangsbohrung 14 vorgesehen ist, zwei Federlaschen 28, die in rotationssymmetrischer Anordnung um die Durchgangsbohrung 14 seitlich an der Klemmplatte 26 angeformt sind, sowie zwei senkrecht abgewinkelte Drucklaschen 30 mit aufgebogenen Ecken 32. Das Klemmelement 12 ist als Stanzteil aus Blech gefertigt und wird durch anschließende Umformungsvorgänge in die dargestellte Form gebracht. Die Enden der Federlaschen 28, deren Verbindungslinie durch die Mitte der Durchgangsbohrung 14 verläuft, sind als Nasen 34 umgebogen, die zum freien Ende hin einen Radius aufweisen. Der Abstand der Scheitelpunkte der Nasen 34 von der Unterseite der Klemmplatte 26 ist kleiner gewählt als die Blechstärke einer im Querschnitt C-förmigen Montageschiene 36 (siehe Fig. 3 bis 5), während die Abstände der freien Kantenenden von der Klemmplatte 26 geringfügig darüber liegen.

Das Spannelement 16 ist an seiner dem Klemmelement 12 zugewandten Seite mit zwei Längsnuten 38 (siehe auch Fig. 3) versehen, die ausreichend breit ausgebildet sind, um jeweils eine Federlasche 28 zwischen ihren Flanken mit geringem Spiel aufnehmen zu können. Im Kontaktbereich zwischen den Federlaschen 28 und den Längsnuten 38 verlaufen diese nicht tangential, so daß bei einem Verdrehen die Federlaschen 28 nicht aus den Nuten 38 rutschen können.

Die in Fig. 1 dargestellten Einzelteile werden zu dem in Fig. 2 dargestellten Befestigungselement 10 vormontiert, wobei die Kontermutter 22 lediglich so weit angezogen wird, daß sich die Federlaschen 28 zwar zwischen den Flanken der Nuten 38 befinden, jedoch noch einen ausreichenden Federweg besitzen, um wenigstens so weit aufgeweitet werden zu können, daß der Abstand zwischen den Scheiteln der Nasen 34 und der Unterseite der Klemmplatte 26 wenigstens gleich der Blechstärke der Montageschiene 36 ist.

In Fig. 3 ist die Montageschiene 36 mit zwei Befestigungselementen 10 dargestellt, von denen das in der Abbildung oben dargestellte Befestigungselement 10 sich bereits in einer vorfixierten Stellung befindet, während das in der Abbildung untere Befestigungselement 10 in seiner Einführstellung vor dem Eindrehen in die vorfixierte Stellung gezeigt ist. Die Montageschiene 36 besitzt einen C-förmigen Querschnitt (siehe Fig. 4) mit einem Boden 40, seitlichen Flanken 42 und zwei zueinander abgewinkelten Schenkelenden 44, zwischen denen ein Montageschlitz 46 verbleibt. Die Montageschiene 36 kann aus umgeformtem Blech oder einem Strangpreßprofil bestehen.

Die Breite des Spannelements 16 ist geringfügig kleiner als die Breite des Montageschlitzes 46 gewählt, so daß sich das vormontierte Befestigungselement 10 gemäß Fig. 2 mit seinem Spannelement 16 zuerst in der in Fig. 3 unten gezeigten Stellung in die Montageschiene 36 einführen läßt. Die Unterseite der Klemmplatte 26 legt sich auf die Außenkanten der Schenkelenden 44 auf, während sich die Enden der Federlaschen 28 zwischen den Schenkelenden 44 im Inneren der Montageschiene 36 befinden. Bei dem anschließenden Eindrehvorgang, bei welchem mit Hilfe der Drucklaschen 30 leicht mit den Fingern das erforderliche Moment aufgebracht werden kann, gleiten die Federlaschen 28 mit ihren Nasen 34 unter die Schenkelenden 44, wobei sie geringfügig aufgebogen werden. Die gerundeten Nasen 34 reduzieren den Eindrehwiderstand erheblich. Schließlich erreicht das Klemmelement 12 die in Fig. 3 oben gezeigte Stellung, in welcher sich die Drucklaschen 30 an die Seitenflanken 42 der Montageschiene 36 anlegen. Während des Eindrehvorgangs erfolgt eine Mitnahme des Spannelements 16 durch die Federlaschen 28 über die Nuten 38. Denkbar ist auch eine Mitnahme über starre, ggf. lösbare Verbindungen. Die Geometrie des Klemmelements 12 mit seinen Federlaschen 28 ist so gewählt, daß zwischen den beiden in Fig. 3 gezeigten Stellungen ein Drehwinkel von ungefähr 20° liegt. Die Ecken des Spannelements 16 verfügen dabei über Abflachungen 48, um das Eindrehen vor dem Erreichen der Anschlagstellung der Drucklaschen 30 nicht zu behindern.

In der vorfixierten Stellung mit noch nicht abschließend angezogener Kontermutter 22 ist das Befestigungselement 10 alleine durch die federnde Anlagekraft der Federlaschen 28 durch das Klemmelement 12 an der Montageschiene 36 fixiert. Die Klemmkräfte, die sich durch geeignete Dimensionierung der Federlaschen 28 beeinflussen lassen, gewähren einen sicheren Halt des Eigengewichts des Befestigungselements auch bei senkrecht montierten Montageschienen 36, erlauben jedoch gleichzeitig noch ein axiales Verschieben des Befestigungselements 10 in der Montageschiene 36 zur Vornahme abschließender Korrekturen. Ein Lösen der vorfixierten Klemmstellung ist jederzeit dadurch möglich, daß man von Hand oder mit einem geeigneten Werkzeug, beispielsweise einem Schraubendreher, unter den Ecken 32 angreift und das Befestigungselement 10 in die in Fig. 3 unten gezeigte Stellung zurückdreht. Sämtliche zur Erzielung der Klemmkräfte in der vorfixierten Stellung benötigten Elastizitäten werden durch die Klemmplatte 26 aufgebracht, so daß keine elastische Verformung der Montageschiene beim Eindrehen des Befestigungselements erfolgt und das Spannelement 16 massiv ausgebildet werden kann.

Durch das Anziehen der Kontermutter 22 werden die Klemmplatte 26 und das Spannelement 16 relativ zueinander bewegt, wobei das Spannelement 16 auf die Federlaschen 28 wirkt und damit die Schenkelenden 44 zwischen der Klemmplatte 26 und den Nasen 34 der Federlaschen verspannt werden. Zwischen den beiden Einspannstellen im Bereich der Nasen 34 an jeweils einem Schenkelende 44 liegt ein bestimmter axialer Versatz, wobei die Verbindungsgerade zwischen den beiden Einspannstellen zur Vermeidung unnötiger Biegemomente die Durchgangsbohrung 14 mittig schneidet. Der axiale Versatz bewirkt bei extremer Überlastung des Befestigungselements 10, beispielsweise im Falle einer durch Wärmedehnung von Rohrleitungen hervorgerufenen axialen Schubbewegung, die Gefahr, daß die Montageschiene 36 unter Aufbiegung ihrer Schenkelenden 44 und Aufweitung ihrer seitlichen Flanken 42 aufgesprengt und das Befestigungselement 10 aus der Schiene 36 herausgerissen werden kann.

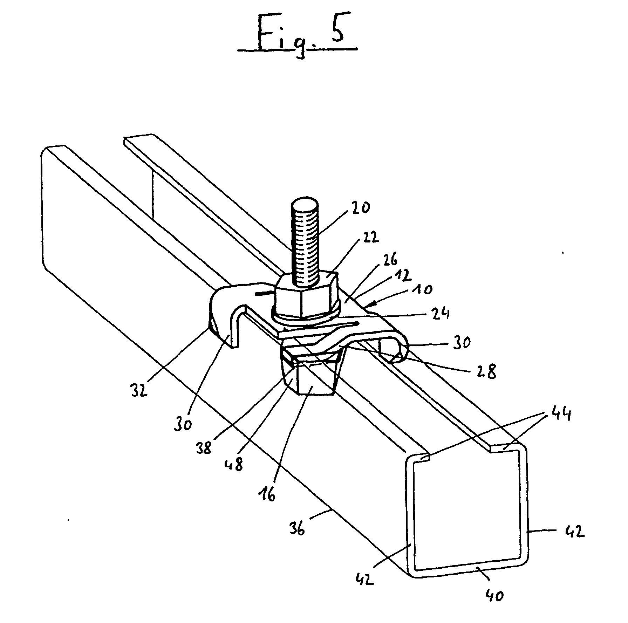

Fig. 4 und 5 zeigen das Befestigungselement 10 in seiner fertig montierten Stellung. Das massiv ausgebildete Spannelement 16 erlaubt das Einleiten sehr großer Kräfte in die Montageschiene 36 in hängender, stehender oder senkrecht an einer Wand montierter Anordnung. Der Gewindestift 20 ist auf seinem in der Montageschiene 36 befindlichen Ende mit einer Gewindesperre (nicht gezeigt) versehen, die ein Ausdrehen aus dem Spannelement 16 verhindert. Es wird auch sichergestellt, daß der Gewindestift 20 nicht nur teilweise in die Durchgangsgewindebohrung 18 eingeschraubt ist, weil dann unter hohen Zugkräften ein Ausreißen des Gewindestifts 20 zu befürchten wäre. Der Gewindestift 20 kann andererseits so weit eingedreht sein, daß sein Kopfende 50 in der Montageschiene 36 am Boden 40 der Montageschiene 36 anliegt, was für eine zusätzliche Sicherheit beim Einleiten sehr großer Druckkräfte in das Befestigungselement 10 sorgt.

An dem Gewindestift 20 des Befestigungselements 10 können weitere Befestigungselemente, wie z. B. Rohrschellen, zum Befestigen haus- und gebäudetechnischer Anlagen angebracht werden, beispielsweise im Heizungs-, Sanitär-, Lüftungs- und Elektroanlagenbau.

## Patentansprüche

1. Befestigungselement zur Verankerung in einer Montageschiene (36) mit im wesentlichen C-förmigem Querschnitt und zwei zueinander abgewickelten Schenkelenden (44) zwischen denen ein Montageschlitz (46) verbleibt, das ein Klemmelement (12) mit einer Durchgangsbohrung (14), das auf die Schenkelenden (44) der Montageschiene (36) auflegbar ist, ein Spannelement (16) mit einer Bohrung (18), das in den Hohlraum der Montageschiene (36) einführbar und hinter die Schenkelenden (44) der Montageschiene (36) eindrehbar ist, und eine sich durch die Bohrungen (14, 18) erstreckende Gewindestange (20) mit einer Kontermutter (22) aufweist, mit deren Hilfe die Schenkelenden (44) zwischen dem Klemmelement (12) und dem Spannelement (16) einspannbar sind, wobei das Befestigungselement (10) mit wenigstens einer Federlasche (28) durch Verdrehen des Klemmelements (12) vorfixierbar ist, **dadurch gekennzeichnet, daß** die wenigstens eine Federlasche (28) an dem Klemmelement (12, 26) vorgesehen ist und durch Verdrehen des Klemmelements (12) unter ein Schenkelende (44) in federnder Anlage einschiebbar ist.

2. Befestigungselement nach Anspruch 1, **dadurch gekennzeichnet, daß** die Federlasche (28) beim Spannen des Spannelements (16) durch Anziehen der Kontermutter (22) zwischen diesem und dem Schenkelende (44) liegt.

3. Befestigungselement nach Anspruch 1 oder 2, **dadurch gekennzeichnet, daß** zwei Federlaschen (28) vorgesehen sind, die in axialem Abstand unter jeweils ein Schenkelende (44) eindrehbar und beide durch das Spannelement (16) gegen die Schenkelenden (44) anpreßbar sind.

4. Befestigungselement nach Anspruch 3, **dadurch gekennzeichnet, daß** die Federlaschen (28) rotationssymmetrisch um die Durchgangsbohrung (14) angeordnet sind.

5. Befestigungselement nach einem der vorhergehenden Ansprüche, **dadurch gekennzeichnet, daß** wenigstens eine Federlasche (28) das Spannelement (16) beim Verdrehen des Klemmelements (12) mitnimmt.

6. Befestigungselement nach Anspruch 5, **dadurch gekennzeichnet, daß** wenigstens eine Federlasche (28) vor dem Anziehen der Kontermutter (22) lose geführt in einer Nut (38) in dem Spannelement (16) liegt oder mit diesem fest oder lösbar verbunden ist.

7. Befestigungselement nach einem der vorhergehenden Ansprüche, **dadurch gekennzeichnet, daß** wenigstens eine Federlasche (28) mit einer Nase (34) auf ihrer Anlageseite an dem Stegende (44) versehen ist, die an ihrer Stirnseite abgerundet oder abgeschrägt ist.

8. Befestigungselement nach einem der vorhergehenden Ansprüche, **dadurch gekennzeichnet, daß** wenigstens eine Federlasche (28) im eingesteckten Zustand quer zur Ausrichtung der Montageschiene (36) liegt.

9. Befestigungselement nach einem der Ansprüche 3 bis 8, **dadurch gekennzeichnet, daß** das Spannelement (16) schmäler als der Abstand zwischen den Schenkelenden (44) ist und eine Länge besitzt, die zum Untergreifen beider Federlaschen (28) ausreicht.

10. Befestigungselement nach einem der vorhergehenden Ansprüche, **dadurch gekennzeichnet, daß** das Spannelement (16) mit einem Durchgangsgewinde (18) für den Gewindestift (20) versehen ist.

11. Befestigungselement nach einem der vorhergehenden Ansprüche, **dadurch gekennzeichnet, daß** der Gewindestift (20) mit Mitteln versehen ist, die ihn am Herausbewegen aus der Bohrung (18) in dem Spannelement (16) hindern.

12. Befestigungselement nach einem der vorhergehenden Ansprüche, **dadurch gekennzeichnet, daß** an dem Klemmelement (12) wenigstens eine im wesentlichen senkrecht abgewinkelte Drucklasche (30) vorgesehen ist.

13. Befestigungselement nach Anspruch 12, **dadurch gekennzeichnet, daß** sich wenigstens eine Drucklasche in der vorfixierten Stellung an eine Flanke (42) der Montageschiene (36) anlegt.

14. Befestigungselement nach Anspruch 13, **dadurch gekennzeichnet, daß** wenigstens eine Drucklasche (30) an einer Stelle (32) aufgebogen ist.

## Claims

1. A fastening element for anchoring in a mounting rail (36) of substantially C-shaped cross-section and with two leg ends (44) which are bent at an angle towards one another and between which a mounting slot (46) remains which has a clamping element (12) with a through-bore (14), which clamping element can be fitted on to the leg ends (44) of the mounting rail (36), a tensioning element (16) with a bore (18) and which can be inserted into the hollow space of the mounting rail (36) and can be rotated behind the leg ends (44) of the mounting rail (36), and a threaded rod (20) which extends through the bores (14,18) and which has a lock nut (22) by means of which the leg ends (44) can be clamped between the clamping element (12) and the tensioning element (16), wherein the fastening element (10) can be provisionally fired by at least one spring shackle (28) by rotation of the clamping element (12), **characterised in that** the at least one spring shackle (28) is provided on the clamping element (12,26) and by rotation of the clamping element (12) it can be inserted under one leg end (44) in resilient abutment thereagainst.

2. A fastening element according to Claim 1, **characterised in that** when the tensioning element (16) is tensioned by tightening the lock nut (22) the spring shackle (28) is disposed between the tensioning element and the leg end (44).

3. A fastening element according to Claim 1 or 2, **characterised in that** two spring shackles (28) are provided, which with axial spacing can be turned under a respective leg end (44) and both of which can be pressed by the tensioning element (16) against the leg ends (44).

4. A fastening element according to Claim 3, **characterised in that** the spring shackles (28) are disposed rotationally symmetrically about the through-bore (14).

5. A fastening element according to any one of the preceding Claims, **characterised in that** at least one spring shackle (28) entrains the tensioning element (16) upon rotation of the clamping element (12).

6. A fastening element according to Claim 5, **characterised in that** before the tightening of the lock nut (22) at least one spring shackle (28) is disposed loosely guided in a groove (38) in the tensioning element (16) or is securely or releasably connected therewith.

7. A fastening element according to any one of the preceding Claims, **characterised in that** at least one spring shackle (28) is provided with a projection (34) on its abutment side against the leg end (44), which projection is rounded or bevelled on its end face.

8. A fastening element according to any one of the preceding Claims, **characterised in that** in the inserted condition at least one spring shackle (28) is disposed transversely to the orientation of the mounting rail (36).

9. A fastening element according to any one of Claims 3 to 8, **characterised in that** the tensioning element (16) is narrower than the distance between the leg ends (44) and is of a length which is sufficient for it to engage under both spring shackles (28).

10. A fastening element according to any one of the preceding Claims, **characterised in that** the tensioning element (16) is provided with a continuous screw-thread (18) for the threaded pin (20).

11. A fastening element according to any one of the preceding Claims, **characterised in that** the threaded pin (20) is provided with means which prevent it from leaving the bore (18) in the tensioning element (16).

12. A fastening element according to any one of the preceding Claims, **characterised in that** at least one compression shackle (30), which is bent substantially perpendicularly, is provided on the clamping element (12).

13. A fastening element according to Claim 12, **characterised in that** in the prelocated position at least one compression shackle abuts against one flank (42) of the mounting rail (36).

14. A fastening element according to Claim 13, **characterised in that** at least one compression shackle (30) is bent up at one location (32).

## Revendications

1. Elément de fixation pour un ancrage dans un rail de montage (36), présentant une section essentiellement en forme de C avec deux extrémités d'aile (44) coudées l'une vers l'autre entre lesquelles subsiste une fente de montage (46), avec un élément de pincement (12) percé d'un alésage de passage (14) pouvant être appliqué sur les extrémités d'aile (44) du rail de montage (36), un élément de serrage (16) percé d'un alésage (18) pouvant être introduit dans l'espace creux du rail de montage (36) et amené par rotation derrière les extrémités d'aile (44) du rail de montage (36), une tige filetée (20) traversant les alésages (14, 18) et portant un contre-écrou (22) par lequel les extrémités d'aile (44) peuvent être serrées entre l'élément de pincement (12) et l'élément de serrage (16), l'élément de fixation (10) avec au moins une patte élastique (28) pouvant être préfixé par rotation de l'élément de pincement (12),
**caractérisé en ce qu'**
au moins une patte élastique (28) est prévue sur l'élément de pincement (12, 26) et peut, par rotation de l'élément de pincement (12), être glissée sous une extrémité d'aile (44) en appui élastique.

2. Elément de fixation selon la revendication 1,
**caractérisé en ce que**
la patte élastique (28), quand on serre l'élément de serrage (16) par vissage du contre-écrou (22), se trouve entre celui-ci et l'extrémité d'aile (44).

3. Elément de fixation selon la revendication 1 ou 2,
**caractérisé en ce que**
deux pattes élastiques (28) sont prévues, elles peuvent être introduites chacune par rotation avec espacement axial sous une extrémité d'aile (44) et mises toutes deux en pression sur les extrémités d'aile (44) par l'élément de serrage (16).

4. Elément de fixation selon la revendication 3,
**caractérisé en ce que**
les pattes élastiques (28) sont symétriques par rapport à l'axe de l'alésage de passage (14).

5. Elément de fixation selon une des revendications précédentes,
**caractérisé en ce qu'**
au moins une patte élastique (28) entraîne l'élément de serrage (16) quand l'élément de pincement (12) tourne.

6. Elément de fixation selon la revendication 5,
**caractérisé en ce qu'**
avant le serrage du contre-écrou (22), au moins une patte élastique (28) passe librement dans une rainure (38) de l'élément de serrage (16) ou est reliée solidairement ou de manière amovible à cet élément.

7. Elément de fixation selon une des revendications précédentes,
**caractérisé en ce qu'**
au moins une patte élastique (28) est équipée sur son côté d'appui sur l'extrémité d'aile (44) d'un ergot (34) arrondi ou taillé en biseau sur sa face frontale.

8. Elément de fixation selon une des revendications précédentes,
**caractérisé en ce qu'**
au moins une patte élastique (28) à l'état emmanché est perpendiculaire à la direction du rail de montage (36).

9. Elément de fixation selon une des revendications 3 à 8,
**caractérisé en ce que**
l'élément de serrage (16) a une largeur inférieur à l'intervalle séparant les extrémités d'aile (44) et une longueur suffisante pour venir en prise sous les deux pattes élastiques (28).

10. Elément de fixation selon une des revendications précédentes,
**caractérisé en ce que**
l'élément de serrage (16) présente un alésage de passage (18) pour la tige filetée (20).

11. Elément de fixation selon une des revendications précédentes,
**caractérisé en ce que**
la tige filetée (20) est équipée de moyens l'empêchant de s'échapper de l'alésage (18) prévu dans l'élément de serrage (16).

12. Elément de fixation selon une des revendications précédentes,
**caractérisé en ce que**
sur l'élément de pincement (12) est prévu au moins une patte de pression (30) coudée pratiquement à angle droit.

13. Elément de fixation selon la revendication 12,
**caractérisé en ce qu'**
au moins une patte de pression en position de préfixation est appliquée sur un flanc (42) du rail de montage (36).

14. Elément de fixation selon la revendication 13,
**caractérisé en ce qu'**
au moins une patte de pression (30) est recourbée en un point (32).
